# EUROPEAN PATENT APPLICATION

(11) **EP 4 769 697 A1**
(43) Date of publication of application: **01.07.2026**
(21) Application number: 25867210.4
(22) Date of filing: 30.09.2025
(51) Int. Cl.: H01M 50/183, H01M 50/342, H01M 10/04

(54) **POUCH CELL ASSEMBLY**

(30) Priority: 29.10.2024 KR 20240149646
(71) Applicant: LG ENERGY SOLUTION, LTD., Seoul 07335 (KR)
(72) Inventor: KO, Hyung Ho, Daejeon 34122 (KR); CHANG, Hyuk Kyun, Daejeon 34122 (KR); LEE, Joo Hyeong, Daejeon 34122 (KR)
(74) Representative: BCKIP Part mbB
(86) International application number: PCT/KR2025/015490
(87) International publication number: WO 2026/095385

(57) **Abstract**

The present disclosure relates to a pouch cell assembly including: a battery cell including an electrode assembly, an electrode lead electrically connected to the electrode assembly, and a battery case that covers the electrode assembly with the electrode lead extending to the outside and has sealed edges; and a clip-type clamp unit fitted to the battery case and fixed to the battery cell, wherein the clamp unit presses the battery case corresponding to the portion where the electrode lead extends.

## Description

### [Technical Field]

The present disclosure relates to a pouch cell assembly.

This application claims the benefit of priority to Korean Patent Application No. 10-2024-0149646, filed on October 29, 2024, and the entire contents of Korean Patent Application No. 10-2024-0149646 are hereby incorporated by reference.

### [Background]

Rechargeable secondary batteries are attracting attention as power sources for devices requiring high power and large capacity, including electric vehicles, hybrid electric vehicles, plug-in hybrid electric vehicles, etc., which are being proposed as solutions to air pollution and other problems caused by conventional gasoline vehicles and diesel vehicles using fossil fuels.

In terms of battery shape, there is high demand for prismatic secondary batteries and pouch-type secondary batteries that can be applied to products such as mobile phones with thin thickness, and in terms of materials, there is high demand for lithium secondary batteries such as lithium-ion batteries and lithium-ion polymer batteries that have advantages of high energy density, discharge voltage, and output stability.

Generally, a secondary battery includes an electrode assembly in which electrodes and separators are alternately stacked, electrode leads connected to the electrodes, a battery case that encloses the electrode assembly with the electrode leads extending to the outside, and an electrolyte filled together with the electrode assembly in the battery case.

During the charging and discharging process of a secondary battery, high-temperature gas may be generated inside, and if the gas pressure exceeds the sealing strength of the battery case, it may explode.

Conventionally, methods are being sought to supplement the sealing strength of the battery case in preparation for such dangerous situations.

### [Summary]

### [Technical Problem]

Therefore, the present disclosure was devised to solve the above problems, and aims to provide a pouch cell assembly with a structure that can reinforce the sealing part of the battery case in a thermal propagation (TP) situation.

In addition, it aims to provide a pouch cell assembly with a structure that can intentionally control the discharge direction of high-temperature gas and by-products generated in a thermal propagation (TP) situation.

Other objects and advantages of the present disclosure can be understood by the following description and will be more clearly understood by the embodiments of the present disclosure. In addition, it will be easily understood that the objects and advantages of the present disclosure can be realized by the means shown in the claims and combinations thereof.

### [Technical Solution]

According to the present disclosure, there is provided a pouch cell assembly including: a battery cell including an electrode assembly, an electrode lead electrically connected to the electrode assembly, and a battery case that covers the electrode assembly with the electrode lead extending to the outside and has sealed edges; and a clip-type clamp unit fitted to the battery case and fixed to the battery cell, wherein the clamp unit presses the battery case corresponding to the portion where the electrode lead extends.

The clamp unit may include: a support plate supporting one surface of the battery cell; and a pressing plate coupled to the support plate and pressing the battery case supported by the support plate through a front end.

The battery case may include: an electrode part corresponding to the position of the electrode assembly; a lead sealing part extending from the electrode part and corresponding to the position where the electrode lead is wrapped and sealed; and a side sealing part extending from the lead sealing part and corresponding to the side position of the electrode assembly, wherein the clamp unit may be fixed to the lead sealing part.

The clamp unit may include a venting part, which is a portion where the pressing of the support plate and pressing plate is weakened based on the width direction of the battery cell.

When the internal gas pressure exceeds the sealing strength of the battery case, the battery cell may discharge gas through the venting part.

A heat-resistant elastomer is provided on the surface of the clamp unit, and the elastomer may be coated on the upper part of the support plate and the lower part of the pressing plate.

The elastomer may be at least one of fluorocarbon rubber and silicone rubber.

The elastomer may not be coated on the venting part.

The clamp unit includes a groove in a portion of the front end of at least one of the pressing plate and the support plate based on the width direction of the battery cell, and the venting part may be formed in the groove.

The clamp unit may further include: an elastic member that transmits elastic force to the pressing plate so that the front end of the pressing plate presses the upper part of the battery case.

### [Advantageous Effects]

According to the present disclosure, it is possible to provide a pouch cell assembly with an improved safety structure in a thermal propagation (TP) situation.

### [Brief Description of the Drawings]

FIG. 1 is a plan view and side view of a battery cell of the present disclosure.
FIG. 2 is a cross-sectional view of a portion of the battery cell of FIG. 1.
FIG. 3 is a perspective view of a pouch cell assembly according to a first embodiment of the present disclosure.
FIG. 4 is a perspective view of the clamp unit of FIG. 3.
FIG. 5 is a front view of the clamp unit of FIG. 3.
FIG. 6 is a plan view of the clamp unit of FIG. 3.
FIG. 7 is a modified example of the battery cell of FIG. 3.
FIG. 8 is a perspective view of a modified example of the clamp unit of FIG. 3.
FIG. 9 is a plan view of a modified example of the clamp unit of FIG. 3.
FIG. 10 is a perspective view of a pouch cell assembly according to a second embodiment of the present disclosure.
FIG. 11 is a front view of the pouch cell assembly according to the second embodiment of the present disclosure.
FIG. 12 is a perspective view of a pouch cell assembly according to a third embodiment of the present disclosure.
FIG. 13 is a front view of the pouch cell assembly according to the third embodiment of the present disclosure.
FIG. 14 is a perspective view of a pouch cell assembly according to a fourth embodiment of the present disclosure.
FIG. 15 is a front view of the pouch cell assembly according to the fourth embodiment of the present disclosure.
FIG. 16 is a perspective view of a pouch cell assembly according to a fifth embodiment of the present disclosure.
FIG. 17 is a front view of the pouch cell assembly according to the fifth embodiment of the present disclosure.
FIG. 18 is a perspective view of a pouch cell assembly according to a sixth embodiment of the present disclosure.
FIG. 19 is a front view of the pouch cell assembly according to the sixth embodiment of the present disclosure.

### [Best Mode for Carrying out the Disclosure]

Hereinafter, preferred embodiments of the present disclosure will be described in detail with reference to the accompanying drawings. Prior to this, terms or words used in this specification and claims should not be construed as being limited to ordinary or dictionary meanings, and should be construed as meanings and concepts consistent with the technical idea of the present disclosure based on the principle that the inventor can appropriately define the concept of terms to explain his or her invention in the best way.

Therefore, it should be understood that the embodiments described in this specification and the configurations shown in the drawings are only the most preferred embodiments of the present disclosure and do not represent all the technical ideas of the present disclosure, and that various equivalents and modifications that can replace them may exist at the time of filing this application.

In addition, in describing the present disclosure, if it is determined that a detailed description of related known configurations or functions may obscure the gist of the present disclosure, the detailed description thereof will be omitted.

Since the embodiments of the present disclosure are provided to more completely explain the present disclosure to those skilled in the art, the shapes and sizes of components in the drawings may be exaggerated, omitted, or schematically illustrated for clearer explanation. Therefore, the size or ratio of each component does not entirely reflect the actual size or ratio.

In describing each drawing, similar reference numerals have been used for similar components. In the accompanying drawings, the dimensions of structures are enlarged and illustrated for clarity of the present disclosure. Terms used to describe various components are for understanding purposes, and the components should not be limited by the terms. The terms are used only for the purpose of distinguishing one component from another. For example, a first component may be named a second component without departing from the scope of the present disclosure, and similarly, the second component may also be named a first component. Singular expressions include plural expressions unless the context clearly indicates otherwise.

As used throughout the specification of the present disclosure, terms such as "comprise" or "have" are intended to designate the presence of a feature, number, step, operation, component, part, or combination thereof described in the specification, and should not be understood to preclude the possibility of the presence or addition of one or more other features, numbers, steps, operations, components, parts, or combinations thereof.

In addition, when a part such as a layer, film, region, or plate is said to be "on" another part, this includes not only the case where it is "directly on" the other part, but also the case where there is another part in between. Conversely, when a part such as a layer, film, region, or plate is said to be "under" another part, this includes not only the case where it is "directly under" the other part, but also the case where there is another part in between. In addition, in the specification of the present disclosure, being disposed "on" may include being disposed on the lower part as well as the upper part.

The present disclosure relates to a pouch cell assembly, and is characterized in that the pouch cell assembly of the present disclosure controls the discharge of high-temperature gas and by-products generated in a thermal propagation (TP) situation through a clip-type clamp unit that is fitted to the battery case and fixed to the battery cell.

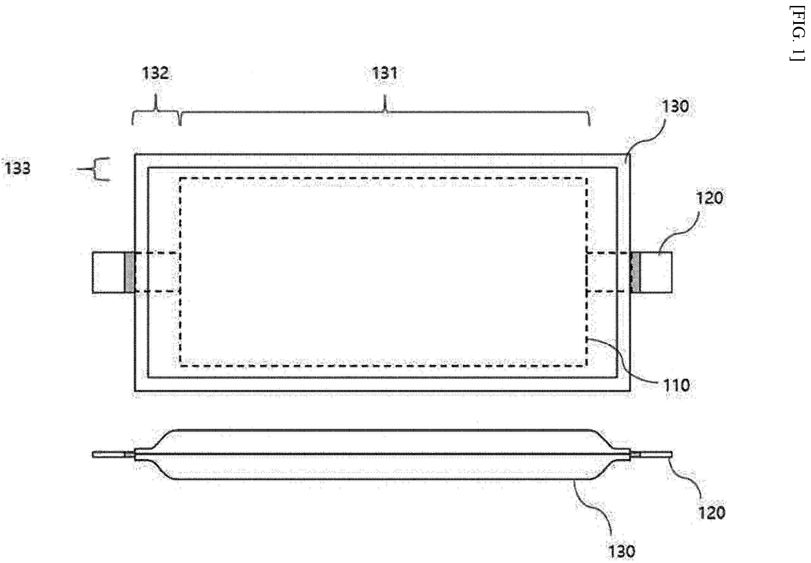

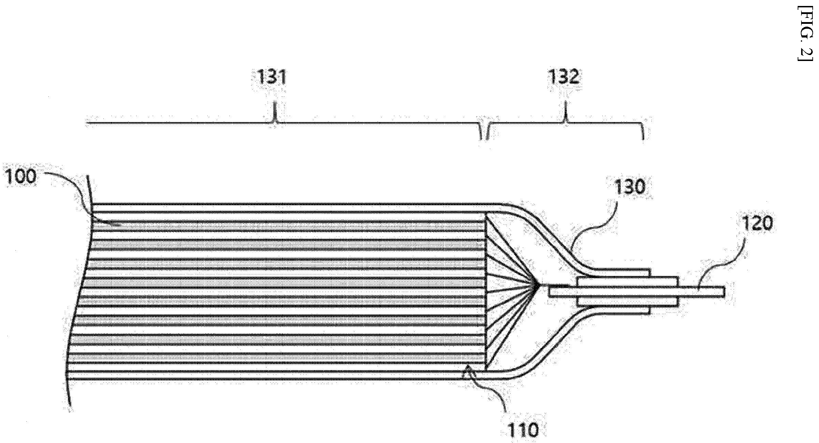

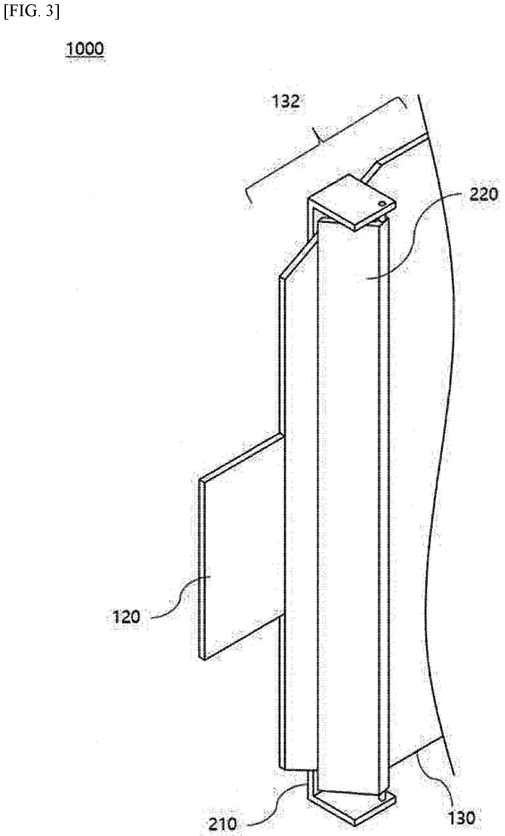

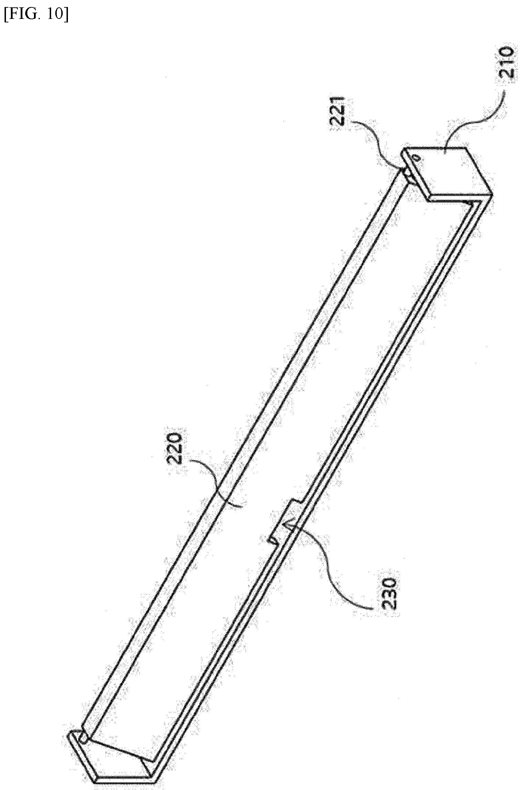

FIGS. 1 and 2 relate to the battery cell of the present disclosure, FIGS. 3 to 9 relate to the pouch cell assembly according to the first embodiment of the present disclosure, and FIGS. 10 to 19 relate to the second to sixth embodiments of the present disclosure, respectively.

Hereinafter, specific embodiments of the pouch cell assembly of the present disclosure will be described in detail with reference to the accompanying drawings. For reference, the relative positions used in the following description, such as front and back or up, down, left, and right, are for helping understanding of the invention, and unless otherwise specified, they are based on the direction shown in the drawings.

(In addition, the longitudinal direction of a certain configuration refers to the direction corresponding to the surface having the longest length of the configuration shown in the drawing based on the horizontal direction, and the width direction of a certain configuration is defined as referring to the direction perpendicular to the longitudinal direction based on the horizontal direction.)

### Pouch Cell Assembly 1000

FIG. 1 is a plan view and side view of the battery cell 100 of the present disclosure, and FIG. 2 is a cross-sectional view of a portion of the battery cell 100 of FIG. 1.

As shown in FIGS. 1 and 2, the battery cell 100 of the present disclosure includes an electrode assembly 110 formed by alternately stacking electrodes and separators, an electrode lead 120 electrically connected to the electrode assembly 110, and a battery case 130 that covers the electrode assembly 110 with the electrode lead 120 extending to the outside and has sealed edges.

As shown in FIG. 1, the battery case 130 can be largely divided into an electrode part 131, a lead sealing part 132, and a side sealing part 133 according to position.

The electrode part 131 is a portion corresponding to the position of the electrode assembly 110.

The lead sealing part 132 is a portion extending from the electrode part 131 and corresponding to the position where the electrode lead 120 is wrapped and sealed.

The side sealing part 133 is a portion extending from the lead sealing part 132 and corresponding to the side position of the electrode assembly 110.

The lead sealing part 132 and the side sealing part 133 are portions where sealing is performed so that the inside of the battery case 130 can be sealed, and are regions where the sealing may rupture and gas may be discharged when the battery cell 100 is in a thermal propagation (TP) situation.

The clamp unit 200 of the present disclosure is fixed to the battery cell 100 and presses the battery case 130 corresponding to the portion where the electrode lead 120 extends.

Various embodiments of the clamp unit 200 will be described below together with FIGS. 3 to 19.

### (First Embodiment)

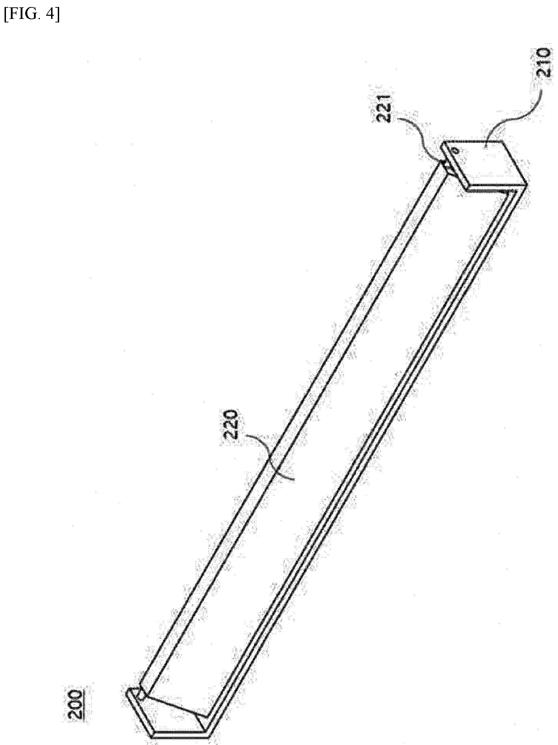

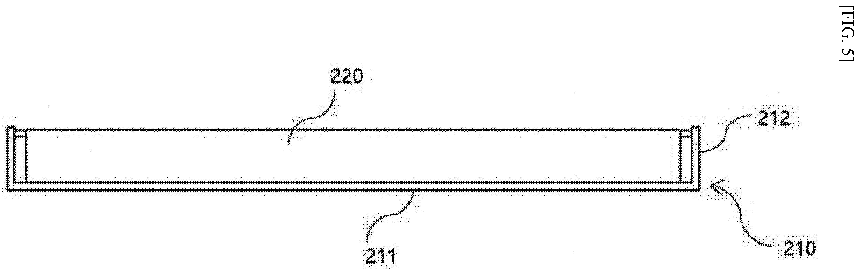

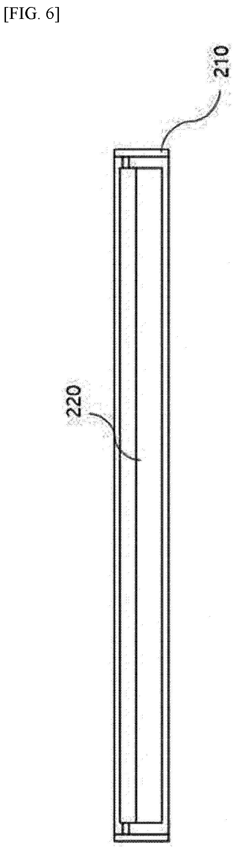

FIG. 3 is a perspective view of the pouch cell assembly 1000 according to the first embodiment of the present disclosure, FIG. 4 is a perspective view of the clamp unit 200 of FIG. 3, FIG. 5 is a front view of the clamp unit 200 of FIG. 3, and FIG. 6 is a plan view of the clamp unit 200 of FIG. 3.

As shown in FIG. 3, the clamp unit 200 of the present disclosure is coupled to the battery cell 100.

According to some embodiments, as shown in FIG. 3, the battery cell 100 may have a pair of electrode leads 120 with different polarities extending from both sides, respectively, and therefore only one electrode lead 120 extends to the coupling portion of the clamp unit 200.

More specifically, the clamp unit 200 is fitted to the lead sealing part 132 of the battery cell 100 and fixed.

The clamp unit 200 includes a support plate 210 and a pressing plate 220.

The support plate 210 serves to support one surface of the battery cell 100 and provides a flat bottom surface.

The support plate 210 supports one surface of the battery cell 100 corresponding to the lead sealing part 132.

As shown in FIG. 5, the support plate 210 includes a support part 211 that has a flat upper surface and is elongated in one direction on a horizontal plane, and a connecting part 212 bent upward from both ends of the support part 211.

The pressing plate 220 is coupled to the support plate 210 and presses the other surface of the battery cell 100 whose one surface is supported by the support plate 210.

The pressing plate 220 is formed to extend corresponding to the support part 211 of the support plate 210, and is coupled to the support plate 210 by being inclined so that the front end touches the upper surface of the support part 211.

The pressing plate 220 is hinge-coupled to the support plate 210 so that it can rotate while drawing an arc.

Specifically, the pressing plate 220 has hinge pins 221 protruding from both sides, and the hinge pins 221 are hinge-coupled to the connecting parts 212 of the support plate 210.

Therefore, the pressing plate 220 can rotate back and forth while drawing an arc around the hinge pin 221.

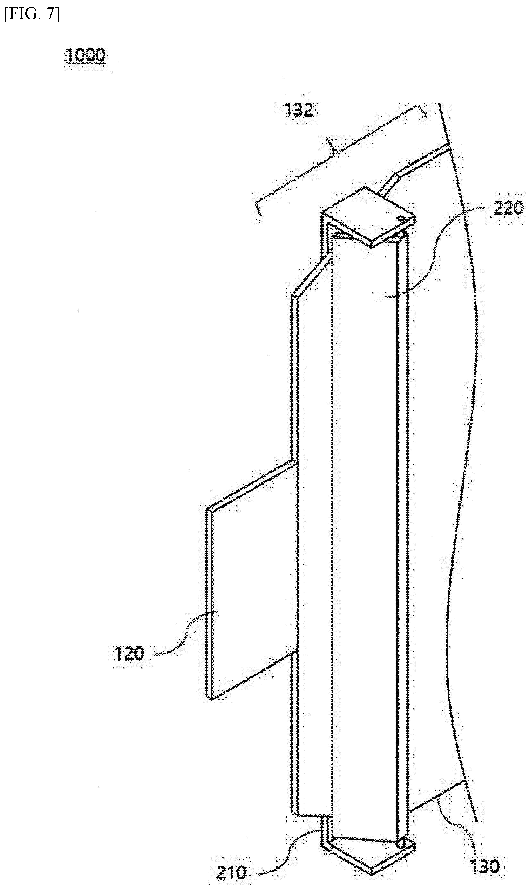

FIG. 7 is a modified example of the battery cell 100 of FIG. 3.

According to a modified example, as shown in FIG. 7, the battery cell 100 may have a pair of electrode leads 120 with different polarities extending from one side, and therefore two electrode leads 120 extend to the coupling portion of the clamp unit 200.

According to FIGS. 3 and 7, the clamp unit 200 of the present disclosure can be applied to pouch-type battery cells 100 of any specification and form.

The clamp unit 200 of the present disclosure maintains a state in which the hinge-coupled pressing plate 220 presses the support plate 210 with a certain pressure. Therefore, the battery cell 100 interposed between the support plate 210 and the pressing plate 220 is pressed by the support plate 210 and the pressing plate 220 and sealed with a certain pressure.

The pressure can be transmitted in various ways. For example, the pressing of the pressing plate 220 can be performed through a structure that transmits elastic force.

Specifically, the clamp unit 200 further includes an elastic member 240 that transmits elastic force to the pressing plate 220 so that the front end of the pressing plate 220 presses the upper part of the battery case 130 in the form shown in FIGS. 3 and 7.

The elastic member 240 serves to allow the pressing plate 220 and the support plate 210 to be pressed against each other with a force equal to the elastic force. That is, the battery cell 100 is sealed with a force equal to the elastic force of the elastic member 240.

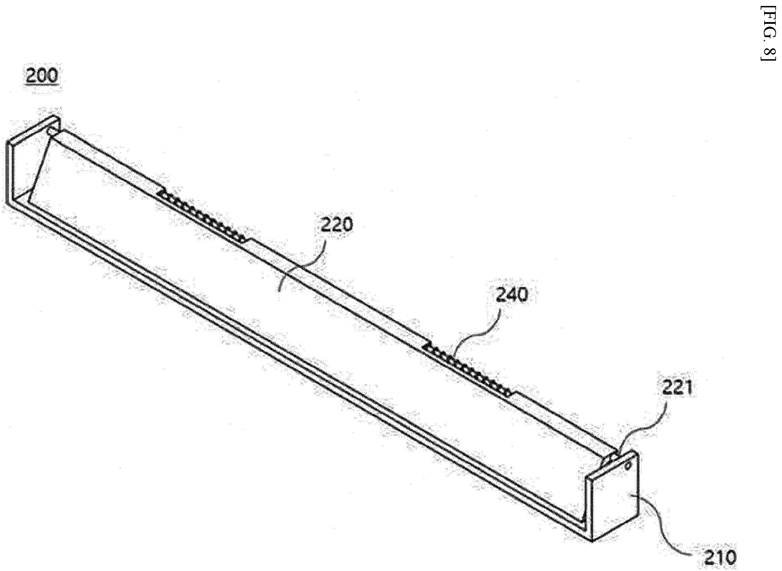

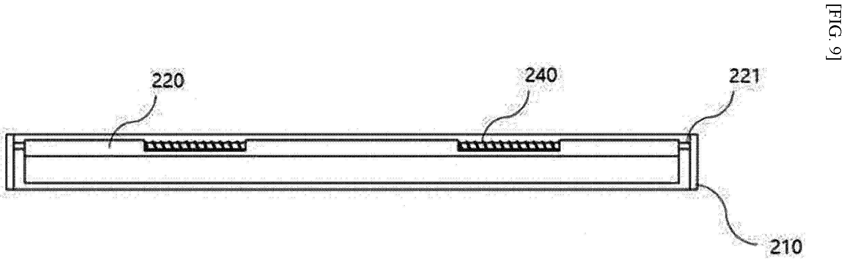

FIG. 8 is a perspective view of a modified example of the clamp unit 200 of FIG. 3, and FIG. 9 is a plan view of a modified example of the clamp unit 200 of FIG. 3.

According to FIG. 8, the hinge pin 221 is provided in a shape that penetrates the pressing plate 220, and the spring-type elastic member 240 is supported by the hinge pin 221 to transmit elastic force to the pressing plate 220. Through such a structure, the elastic member 240 can continuously transmit elastic force to the pressing plate 220 and the support plate 210.

However, the coupling method of the elastic member 240 and the method of transmitting elastic force are only one example, and any structure that can produce the same effect can be applied.

In the pouch cell assembly 1000 of the present disclosure, in a thermal propagation (TP) situation, the sealing area of the battery case 130 may primarily rupture due to an increase in internal gas pressure. In particular, the lead sealing part 132 of the portion where the electrode lead 120 extends, which has relatively weak sealing, may rupture, and it is possible to suppress the release of gas to some extent by the pressing force of the clamp unit 200.

### (Second Embodiment)

The pouch cell assembly 1000 of the present disclosure not only supplements the sealing strength of the battery case 130 through the clamp unit 200, but also can control the discharge direction of gas, flame, by-products, etc.

The pouch cell assembly 1000 according to the second embodiment of the present disclosure further includes a venting part 230 that can intentionally induce the discharge of gas, etc.

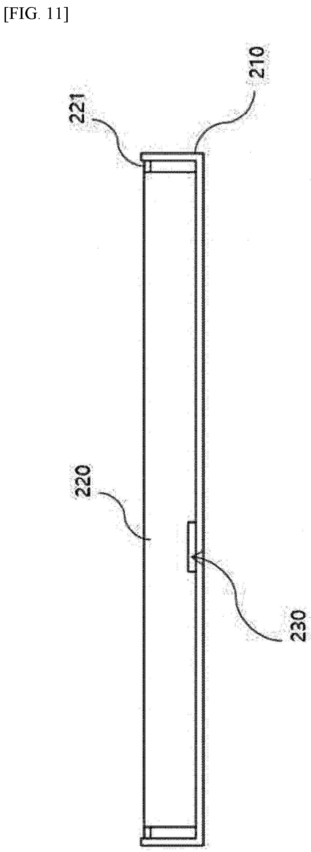

FIG. 10 is a perspective view of the pouch cell assembly 1000 according to the second embodiment of the present disclosure, and FIG. 11 is a front view of the pouch cell assembly 1000 according to the second embodiment of the present disclosure.

The clamp unit 200 includes a venting part 230, which is a portion where the pressing of the support plate 210 and the pressing plate 220 is weakened based on the width direction of the battery cell 100 (or the extending direction of the support part 211).

According to FIGS. 10 and 11, the clamp unit 200 includes a groove at the front end of the pressing plate 220, and the venting part 230 is formed in the groove.

That is, the venting part 230 is a portion where the pressing plate 220 and the support plate 210 do not touch each other, and therefore, the venting part 230 is a portion where the pressing of the battery cell 100 is weakened.

Therefore, when the battery cell 100 explodes due to an increase in internal gas pressure in a thermal propagation (TP) situation, it can discharge gas, etc. to the venting part 230 where the pressing is weakest.

At this time, the venting part 230 may be a portion that overlaps with the electrode lead 120, or may be a portion that does not overlap with the electrode lead 120.

### (Third Embodiment)

The pouch cell assembly 1000 of the present disclosure not only supplements the sealing strength of the battery case 130 through the clamp unit 200, but also can control the discharge direction of gas, flame, by-products, etc.

The pouch cell assembly 1000 according to the third embodiment of the present disclosure can form the venting part 230 in a different way.

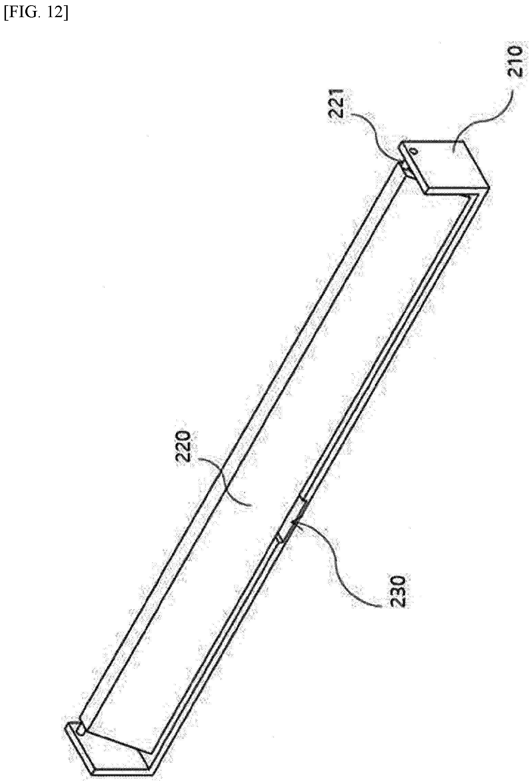

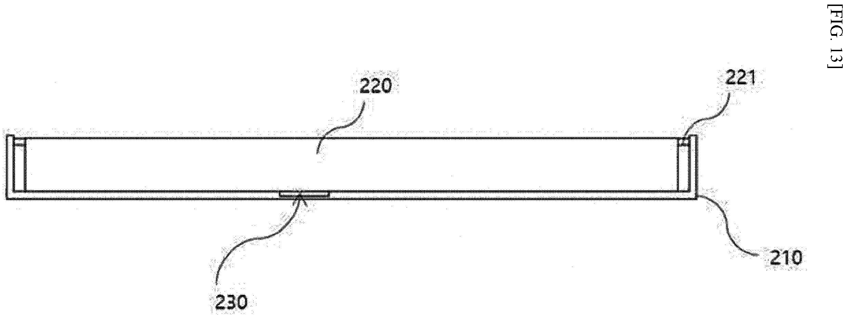

FIG. 12 is a perspective view of the pouch cell assembly 1000 according to the third embodiment of the present disclosure, and FIG. 13 is a front view of the pouch cell assembly 1000 according to the third embodiment of the present disclosure.

The clamp unit 200 includes a venting part 230, which is a portion where the pressing of the support plate 210 and the pressing plate 220 is weakened based on the width direction of the battery cell 100 (or the extending direction of the support part 211).

According to FIGS. 12 and 13, the clamp unit 200 includes a groove on the upper part of the support plate 210, and the venting part 230 is formed in the groove.

That is, the venting part 230 is a portion where the pressing plate 220 and the support plate 210 do not touch each other, and therefore, the venting part 230 is a portion where the pressing of the battery cell 100 is weakened.

Therefore, when the battery cell 100 explodes due to an increase in internal gas pressure in a thermal propagation (TP) situation, it can discharge gas, etc. to the venting part 230 where the pressing is weakest.

At this time, the venting part 230 may be a portion that overlaps with the electrode lead 120, or may be a portion that does not overlap with the electrode lead 120.

### (Fourth Embodiment)

The pouch cell assembly 1000 of the present disclosure not only supplements the sealing strength of the battery case 130 through the clamp unit 200, but also can control the discharge direction of gas, flame, by-products, etc.

The pouch cell assembly 1000 according to the fourth embodiment of the present disclosure can form the venting part 230 in a different way.

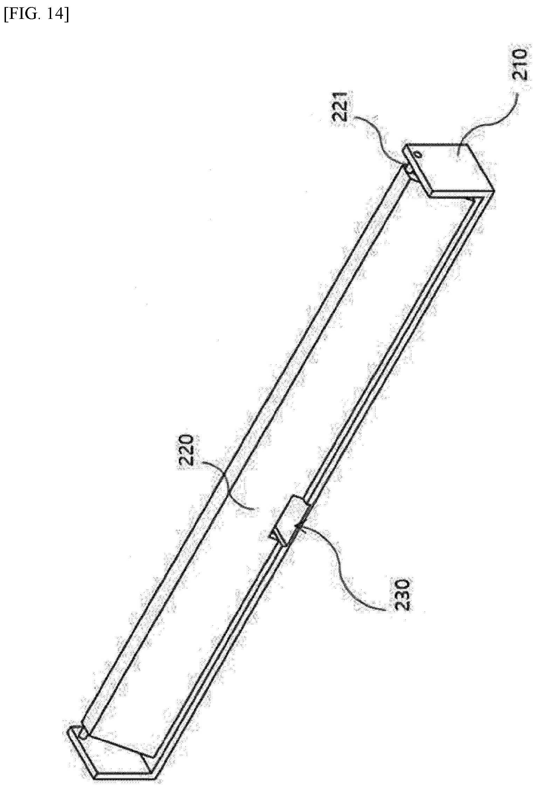

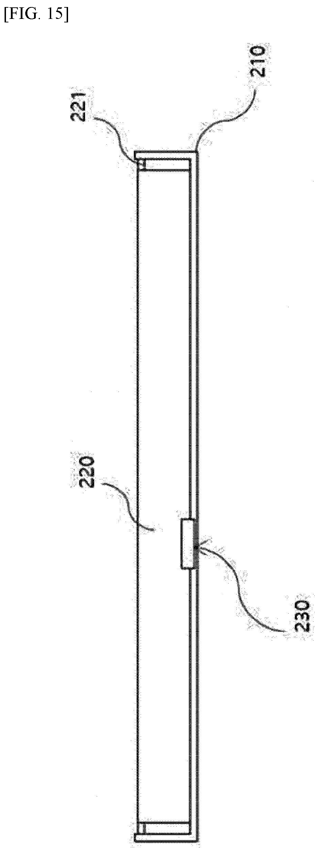

FIG. 14 is a perspective view of the pouch cell assembly 1000 according to the fourth embodiment of the present disclosure, and FIG. 15 is a front view of the pouch cell assembly 1000 according to the fourth embodiment of the present disclosure.

The clamp unit 200 includes a venting part 230, which is a portion where the pressing of the support plate 210 and the pressing plate 220 is weakened based on the width direction of the battery cell 100 (or the extending direction of the support part 211).

According to FIGS. 14 and 15, the clamp unit 200 includes a groove at the front end of the pressing plate 220, and also the support plate 210 includes a groove at a position corresponding to the groove of the pressing plate 220. The venting part 230 is formed in the grooves of the pressing plate 220 and the support plate 210.

That is, the venting part 230 is a portion where the pressing plate 220 and the support plate 210 do not touch each other, and therefore, the venting part 230 is a portion where the pressing of the battery cell 100 is weakened.

Therefore, when the battery cell 100 explodes due to an increase in internal gas pressure in a thermal propagation (TP) situation, it can discharge gas, etc. to the venting part 230 where the pressing is weakest.

At this time, the venting part 230 may be a portion that overlaps with the electrode lead 120, or may be a portion that does not overlap with the electrode lead 120.

### (Fifth Embodiment)

A heat-resistant elastomer 300 may be provided on the clamp unit 200 of the present disclosure.

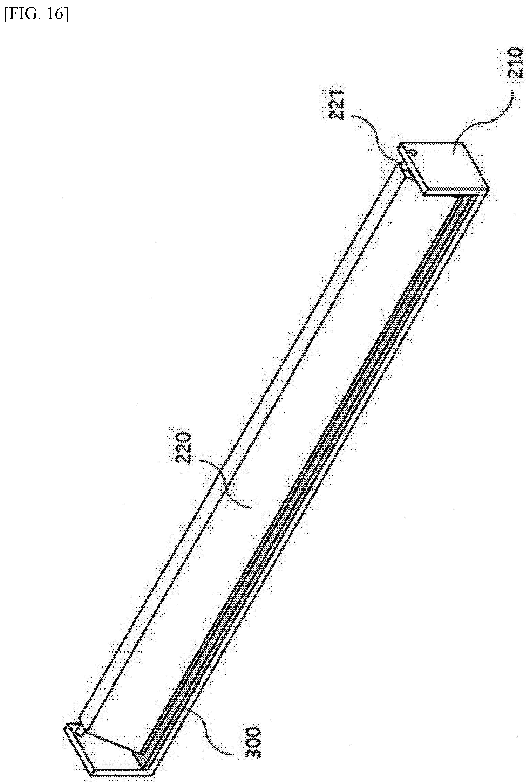

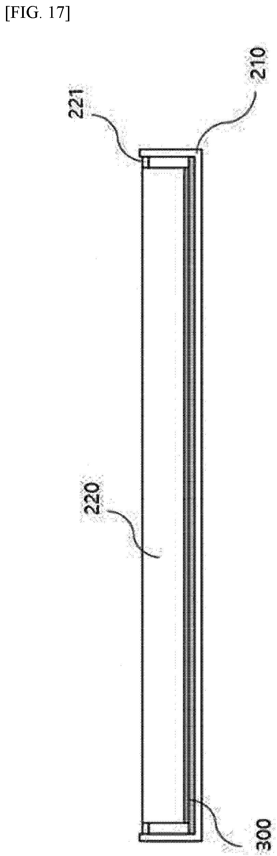

FIG. 16 is a perspective view of the pouch cell assembly 1000 according to the fifth embodiment of the present disclosure, and FIG. 17 is a front view of the pouch cell assembly 1000 according to the fifth embodiment of the present disclosure.

As shown in FIGS. 16 and 17, the clamp unit 200 is provided with a heat-resistant elastomer 300 on the surface of the clamp unit 200.

The elastomer 300 is coated on the upper part of the support plate 210 and the lower part of the pressing plate 220.

The elastomer 300 can be used for the purpose of increasing the friction between the battery case 130 and the clamp unit 200, and also for the purpose of improving sealing strength.

That is, the elastomer 300 can help improve the adhesion with the battery case 130, which has an unsmooth surface, due to the property of being pressed when a certain pressure is applied.

Since the elastomer 300 should minimize damage caused by high-temperature gas and flame, it is preferable to have heat resistance.

It is preferable that the elastomer 300 is at least one of fluorocarbon rubber and silicone rubber.

### (Sixth Embodiment)

A heat-resistant elastomer 300 may be provided on the clamp unit 200 of the present disclosure.

The pouch cell assembly 1000 according to the sixth embodiment of the present disclosure can form the venting part 230 in a different way.

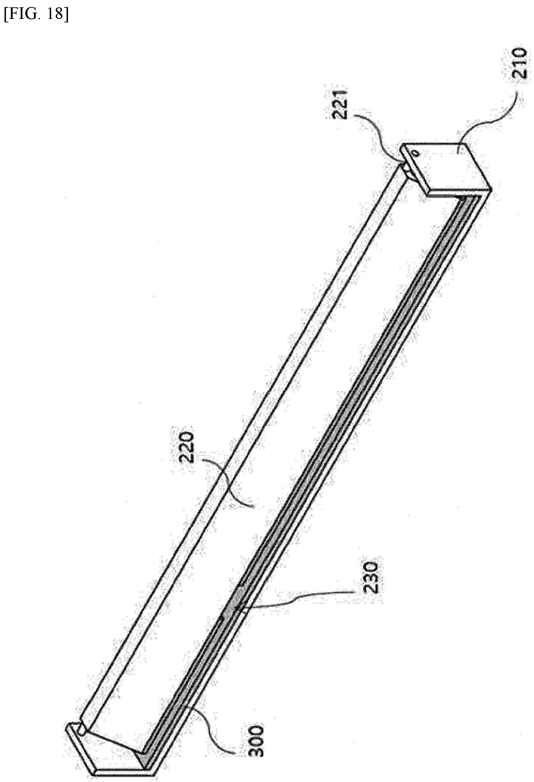

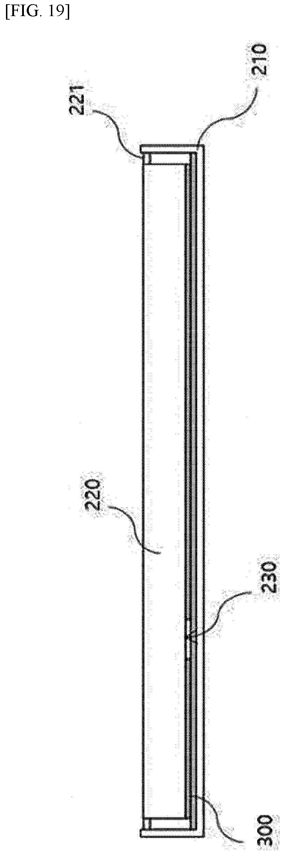

FIG. 18 is a perspective view of the pouch cell assembly 1000 according to the sixth embodiment of the present disclosure, and FIG. 19 is a front view of the pouch cell assembly 1000 according to the sixth embodiment of the present disclosure.

The clamp unit 200 includes a venting part 230, which is a portion where the pressing of the support plate 210 and the pressing plate 220 is weakened based on the width direction of the battery cell 100 (or the extending direction of the support part 211).

According to FIGS. 18 and 19, the elastomer 300 is coated on the upper part of the support plate 210 and the lower part of the pressing plate 220.

In the pouch cell assembly 1000 according to the sixth embodiment of the present disclosure, the elastomer 300 is not coated on a portion of at least one of the pressing plate 220 and the support plate 210. That is, the elastomer 300 is not coated on the portion where the venting part 230 is to be formed.

A groove is formed by the depth at which the elastomer 300 is not coated, and the venting part 230 becomes the groove portion.

Referring to FIGS. 18 and 19, the clamp unit 200 forms the venting part 230 by not coating the elastomer 300 at a certain depth on a portion of the pressing plate 220. Therefore, the pressing force may not be transmitted to the battery cell 100 as much as the elastomer 300 is not coated.

Although not shown, the elastomer 300 may not be coated on a portion of the support plate 210 to form the venting part 230, or the elastomer 300 may not be coated on both a portion of the pressing plate 220 and the support plate 210 to form the venting part 230.

When the battery cell 100 explodes due to an increase in internal gas pressure in a thermal propagation (TP) situation, it can discharge gas, etc. to the venting part 230 where the pressing is weakest.

At this time, the venting part 230 may be a portion that overlaps with the electrode lead 120, or may be a portion that does not overlap with the electrode lead 120.

The present disclosure has been described in more detail above through drawings and embodiments. However, the configurations described in the drawings or embodiments described in this specification are only one embodiment of the present disclosure and do not represent all the technical ideas of the present disclosure, and it should be understood that various equivalents and modifications that can replace them may exist at the time of filing this application.

### [Description of Reference Numerals]

1000: POUCH CELL ASSEMBLY
100: BATTERY CELL
110: ELECTRODE ASSEMBLY
120: ELECTRODE LEAD
130: BATTERY CASE
131: ELECTRODE PART
132: LEAD SEALING PART
133: SIDE SEALING PART
200: CLAMP UNIT
210: SUPPORT PLATE
211: SUPPORT PART
212: CONNECTING PART
220: PRESSING PLATE
221: HINGE PIN
230: VENTING PART
240: ELASTIC MEMBER
300: ELASTOMER

## Claims

1. A pouch cell assembly comprising:
a battery cell comprising an electrode assembly, an electrode lead electrically connected to the electrode assembly, and a battery case that covers the electrode assembly with the electrode lead extending to the outside and has sealed edges; and
a clip-type clamp unit fitted to the battery case and fixed to the battery cell, wherein
the clamp unit presses the battery case corresponding to the portion where the electrode lead extends.

2. The pouch cell assembly of claim 1, wherein
the clamp unit comprises:
a support plate supporting one surface of the battery cell; and
a pressing plate coupled to the support plate and pressing the battery case supported by the support plate through a front end.

3. The pouch cell assembly of claim 1, wherein
the battery case comprises:
an electrode part corresponding to the position of the electrode assembly;
a lead sealing part extending from the electrode part and corresponding to the position where the electrode lead is wrapped and sealed; and
a side sealing part extending from the lead sealing part and corresponding to the side position of the electrode assembly, wherein
the clamp unit is fixed to the lead sealing part.

4. The pouch cell assembly of claim 1, wherein
the clamp unit includes a venting part, which is a portion where the pressing of the support plate and pressing plate is weakened based on the width direction of the battery cell.

5. The pouch cell assembly of claim 4, wherein
when the internal gas pressure exceeds the sealing strength of the battery case, the battery cell discharges gas through the venting part.

6. The pouch cell assembly of claim 4, wherein
a heat-resistant elastomer is provided on the surface of the clamp unit, and
the elastomer is coated on the upper part of the support plate and the lower part of the pressing plate.

7. The pouch cell assembly of claim 6, wherein
the elastomer is at least one of fluorocarbon rubber and silicone rubber.

8. The pouch cell assembly of claim 6, wherein
the elastomer is not coated on the venting part.

9. The pouch cell assembly of claim 4, wherein
the clamp unit comprises a groove in a portion of the front end of at least one of the pressing plate and the support plate based on the width direction of the battery cell, and
the venting part is formed in the groove.

10. The pouch cell assembly of claim 1, wherein
the clamp unit further comprises:
an elastic member that transmits elastic force to the pressing plate so that the front end of the pressing plate presses the upper part of the battery case.
